Europäisches Patentamt

European Patent Office

Office européen des brevets

(11) Veröffentlichungsnummer : **0 087 632**
**B1**

(12) **EUROPÄISCHE PATENTSCHRIFT**

(45) Veröffentlichungstag der Patentschrift :
11.12.85

(21) Anmeldenummer : 83101257.0

(22) Anmeldetag : 10.02.83

(51) Int. Cl.⁴ : **F 16 T 1/14, B 60 T 17/00**

(54) Gesteuertes Entwässerungsventil für Druckluftanlagen.

(30) Priorität : 26.02.82 DE 3207052

(43) Veröffentlichungstag der Anmeldung :
07.09.83 Patentblatt 83/36

(45) Bekanntmachung des Hinweises auf die Patenterteilung : 11.12.85 Patentblatt 85/50

(84) Benannte Vertragsstaaten :
AT BE DE FR GB IT NL

(56) Entgegenhaltungen :
DE-U- 7 523 279
US-A- 1 520 124

(73) Patentinhaber : **Knorr-Bremse GmbH**
**Moosacher Strasse 80**
**D-8000 München 40 (DE)**

(72) Erfinder : **Ruess, Leopold**
**Trollblumenstrasse 19a**
**D-8000 München 50 (DE)**
Erfinder : **Unger, Hans**
**St. Benediktstrasse 7**
**D-8044 Unterschleissheim (DE)**

**Beschreibung**

Die Erfindung bezieht sich auf ein gesteuertes Entwässerungsventil für Druckluftanlagen, insbesondere Druckluftbremsanlagen von Kraftfahrzeugen, mit einem Gehäuse, das eine ständig mit einer Einlaßöffnung in Verbindung stehende Kondensatkammer aufweist, von welcher eine durch einen in Schließrichtung vorbelasteten Ventilkörper verschließbare Auslaßöffnung zur Atmosphäre führt, mit einem quer zur Bewegungsrichtung des Ventilkörpers verschieblichen, von einem Steuerdruck beaufschlagbaren Steuerkolben und mit einem Nockengetriebe zur Koppelung des Ventilkörpers mit dem Steuerkolben, wobei das Nockengetriebe einen vom Steuerkolben einseitig auskragenden Nockenarm mit einem in Bewegungsrichtung des Ventilkörpers zum Freigeben der Auslaßöffnung vorspringenden Steuernocken und einen mit dem Steuernocken zusammenwirkenden, mit dem Ventilkörper verbundenen Gleitstein umfaßt.

Ein derartiges Entwässerungsventil ist dem DE-U-75 23 279 entnehmbar. Bei diesem bekannten Entwässerungsventil endet der Nockenarm mit einem Führungsstück, welches nicht abgedichtet im Gehäuse verschieblich geführt ist. Der Steuerkolben ist somit jeweils über seine gesamte Fläche auf einer Seite vom Steuerdruck und auf der anderen Seite vom Druck in der Kondensatkammer belastet; zusätzlich ist eine ihn von seiten des Steuerdruckes belastende. Druckfeder vorgesehen. Während nun bei nahezu allen Druckluftanlagen der Steuerdruck stets relativ rasch ansteigt und zumeist auch wieder rasch abfällt, wobei sich eine voll befriedigende Funktionsweise des bekannten Entwässerungsventils ergibt, gibt es auch Druckluftanlagen, bei welchen der Steuerdruck nur sehr langsam, allmählich abfällt. Dies ist besonders dann der Fall, wenn beispielsweise bei einer Druckluftbremsanlage für Kraftfahrzeuge der in einer Verbindungsleitung von einem Kompressor zu einem Druckregler anstehende Druck als Steuerdruck verwendet wird : Bei abgestelltem Kompressorantrieb, beispielsweise abgestelltem Motor entweicht die in der Verbindungsleitung anstehende Druckluft langsam über die Kompressorventile, wodurch sich in dieser Verbindungsleitung ein allmählicher Druckabbau ergibt. Beim ebenso allmählich sinkenden Steuerdruck für das Entwässerungsventil kann sich eine langsame Bewegung des Steuerkolbens ergeben, der Steuernocken wandert nur langsam unter dem Gleitstein hindurch und durch den Ventilkörper wird entsprechend lange die Auslaßöffnung geöffnet gehalten. Aus der Druckluftbremsanlage, insbesondere dem mit dem Entwässerungsventil versehenen Druckluftvorratsbehälter, strömt während der ganzen Öffnungszeit der Auslaßöffnung Druckluft ins Freie ab, wodurch sich ein unerwünschter Energieverlust ergibt und nach dem Wiederanlaufen des Kompressors eine gewisse Zeitspanne bis zum vollen Wiederaufladen der Druckluftbremsanlage und dem Erreichen deren vollen Betriebsbereitschaft benötigt wird.

Es sind natürlich auch Druckluftanlagen vorstellbar, bei welchen im Gegensatz zu den vorstehend erwähnten Druckluftanlagen der Steuerdruck nur langsam ansteigt, dagegen rasch abfällt. Auch bei Ansteuerung des bekannten Entwässerungsventils mit einem derartigen Steuerdruck können sich während des langsamen Steuerdruck-Anstieges lang anhaltende, unerwünschte Entlüftungen für die Druckluftanlage über die Auslaßöffnung ergeben.

Es ist Aufgabe der Erfindung, ein Entwässerungsventil der eingangs genannten Art mit einfachen Mitteln derart auszugestalten, daß langsam verlaufende Druckänderungen des Steuerdruckes keine unerwünscht lange Öffnungszeiten für die Auslaßöffnung und damit kein unnötiges Abblasen von Druckluft aus der Druckluftanlage mit entsprechender Druckabsenkung in dieser bewirken können.

Diese Aufgabe wird nach der Erfindung dadurch gelöst, daß das Nockengetriebe eine in Abhängigkeit von der Bewegungsrichtung des Steuerkolbens schaltende Freilaufeinrichtung aufweist, welche eine Bewegungsübertragung vom Steuerkolben über das Nockengetriebe zum Ventilkörper nur in einer Bewegungsrichtung des Steuerkolbens ermöglicht.

Bei einer Ausbildung des Entwässerungsventils gemäß den Merkmalen der Erfindung ergibt sich durch die Freilaufeinrichtung, daß das Nockengetriebe die Auslaßöffnung vermittels des Ventilkörpers nur bei Bewegung des Steuerkolbens in derjenigen Richtung öffnet, in welcher sich der Steuerkolben bei rascher Druckänderung bewegt ; in entgegengesetzter Bewegungsrichtung des Steuerkolbens dagegen löst die Freilaufeinrichtung und verhindert ein Öffnen der Auslaßöffnung, so daß auch die langsame Steuerkolben-Bewegung keine nachteiligen Auswirkungen zeitigt.

Die nach der weiteren Erfindung vorteilhafte Ausgestaltung des Entwässerungsventils ist den Unteransprüchen entnehmbar.

In der Zeichnung sind beispielsweise nach der Erfindung ausgebildete Entwässerungsventile dargestellt, und zwar zeigt

Figur 1 ein aufgeschnittenes Entwässerungsventil,

Figur 2 einen Schnitt gemäß Linie II-II in Fig. 1,

Figur 3 und 4 zwei Einzelteile des Entwässerungsventils, und

Figur 5 einen Ausschnitt aus einer modifizierten Ausführungsform in vergrößertem Maßstab.

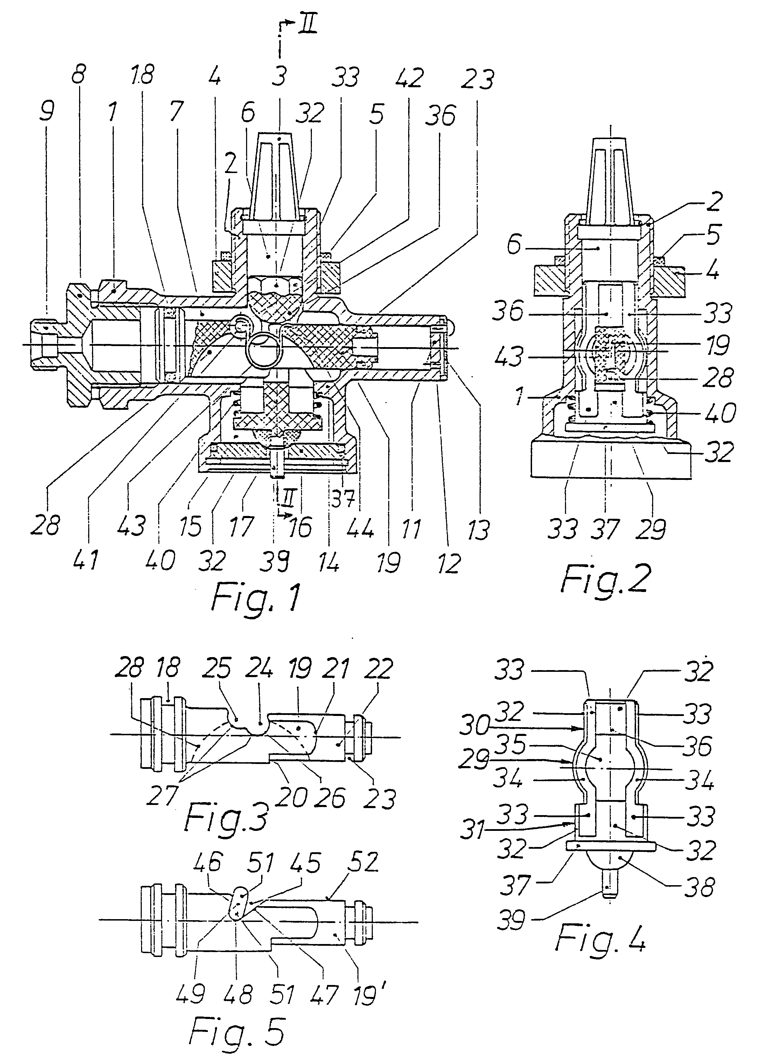

Das Entwässerungsventil weist gemäß Fig. 1 ein Gehäuse 1 auf, welches auf seiner Oberseite mit einem vertikalen Anschlußstutzen 2 mit Siebkorb 3 versehen ist, mit welchen es in einen Rohranschluß eines zu entwässernden, nicht dargestellten Behälters einer Druckluftanlage, vorzugsweise eines Bremsluftbehälters einer Druckluftbremsanlage eines Kraftfahrzeuges einzuschrauben ist. Zum einfachen, dichten Anschluß ist der Anschlußstutzen 2 mit einer Kontermutter 4 mit Dichtungsring 5 versehen. Die Bohrung 6 des Anschlußstutzens 2 mündet in eine quer zur ihr verlaufende Bohrung 7 im Gehäuse 1, welche einerseits durch einen Verschlußstopfen 8 mit einem Anschlußnippel 9 für eine Steuerleitung verschlossen ist. Andererseits der Bohrung 6 verjüngt sich in einigem Abstand zur Bohrung 6 die Bohrung 7 zu einer Bohrung 10 mit relativ kleinem Durchmesser, welche von einer Gehäusewand 11 abgeschlossen ist. Die Gehäusewand 11 ist von Belüftungsöffnungen 12 durchbrochen, welche zum Schutz gegen Verschmutzungen auf der Außenseite von einer Platte 13 undicht abgedeckt sind. Andererseits der Bohrung 7 setzt sich die Bohrung 6 im Durchmesser vergrößert in einer Gehäusewand 14 fort und mündet in eine nochmals erweiterte Ventilkammer 15, welche zur Atmosphäre mittels einer in das Gehäuse 1 dicht eingesetzten Verschlußplatte 16 verschlossen ist. Die Verschlußplatte 16 weist eine zentrische Durchbrechung 17 auf, deren der Ventilkammer 15 zugewandte Öffnung als Ventilsitz ausgebildet ist.

In der Bohrung 7 ist nahe des Verschlußstopfens 8 ein Steuerkolben 18 verschieblich geführt, welcher auf seiten der Bohrung 6 einen diese überkreuzenden Nockenarm 19 trägt. In Fig. 3 ist der Steuerkolben 18 mit dem Nockenarm 19 als Einzelteil in Ansicht dargestellt. Der Nockenarm 19 weist im Ansatz an den Steuerkolben 18 einen rechteckigen Querschnitt auf, wie er auch aus Fig. 2 ersichtlich ist. Etwa in der Mitte seiner Längserstreckung verjüngt sich bei der Stufe 20 der Querschnitt des Nockenarmes 19, geht in einigem Abstand von der Stufe 20 bei der Verschneidungslinie 21 in einen zylindrischen Führungsabschnitt 22 über und endet mit einem Kolben 23. Unmittelbar vor der Stufe 20 auf seiten des Kolbens 18 ist der Nockenarm 19 mit einer von seiner Oberseite ausgehenden, schrägen Nut 24 versehen, wobei die Nut 24 von ihrer Öffnung 25 zum Nutgrund 26 in Richtung zum Kolben 23 hin geneigt ist. Die dem Steuerkolben 18 zugewandte Nutwandung ist mit zwei aneinander anschließenden, teilzylindrischen Ausrundungen 27 versehen, die andersseitige Nutwandung verläuft etwa senkrecht zur Längsrichtung des Nockenarmes 19. In seinem mittleren Bereich ist der Nockenarm 19 von einer vertikalen, schmalen Ausnehmung 28 durchbrochen, welche aus den Figuren 1 bis 3 ersichtlich ist, welche in die Wandungen der Nut 24 mündet und welche beispielsweise durch einen von unten an den Nockenarm 19 angesetzten Kreissägeschnitt gebildet sein kann.

Aus Figur 1 ist ersichtlich, daß im montierten Zustand die Nut 24 sich etwa im Bereich der Überschneidungen der Bohrungen 6 und 7 befindet und daß der Kolben 23 in der verjüngten Bohrung 10 geführt ist.

Weiterhin befindet sich im Gehäuse 1 ein den Nockenarm 19 überkreuzender Ventilkörper 29, der als Einzelteil in Fig. 4 dargestellt ist. Der Ventilkörper 29 weist zwei mit Abstand zueinander axial versetzt angeordnete Führungsabschnitte 30, 31 auf, mit welchen er im Bereich des Anschlußstutzens 2 und der Gehäusewand 14 in der Bohrung 6 vertikal verschieblich geführt ist. Die Führungsabschnitte 30, 31 sind mit seitlich auskragenden Führungsflügeln 32 versehen, welche an der Wandung der Bohrung 6 anliegen und zwischen sich Längsnuten 33 freilassen. Die beiden Führungsabschnitte 30 und 31 sind mittels zwei ausgebaucht geformter Stege 34 miteinander verbunden, deren Auskontur ballig geformt ist. Die beiden Stege 34 sowie die Führungsabschnitte 30 und 31 umschließen einen Freiraum 35, durch welchen im montiertem Zustand des Ventilkörpers 29 der Nockenarm 19 sich erstreckt. Die seitens des oberen Führungsabschnittes 30 an den Freiraum 35 angrenzende Wandung ist zylindrisch gerundet, so daß dieser Führungsabschnitt 30 hinsichtlich der Oberfläche des Nockenarmes 19 einen Kulissenstein 36 bildet. Der untere Führungsabschnitt 31 endet mit einem Flansch 37 mit zylindrischem Außenumfang, an welchen sich nach unten zentrisch ein Ventilkegel 38 mit einem nach unten vorspringenden Zapfenansatz 39 anschließt. Bei der Montage des Ventilkörpers 29 in das Gehäuse 1 wird zwischen den Flansch 37 und die Gehäusewandung 14 eine Druckfeder 40 eingespannt, welche den Ventilkörper 29 mit seinem Ventilkegel 38 gegen den Ventilsitz der Durchbrechung 17 drückt, die eine Auslaßöffnung aus der Ventilkammer 15 zur Atmosphäre bildende Durchbrechung 17 wird somit durch den federnd angedrückten Ventilkegel 38 verschlossen. Der Zapfenansatz 39 durchragt dabei mit allseitigem Spiel die Durchbrechung 17 und endet mit geringem Überstand unterhalb der Verschlußplatte 16. Der Kulissenstein 36 befindet sich hierbei in geringem Abstand oberhalb der Oberfläche des Nockenarmes 19.

Gemäß Fig. 1 befindet sich in der Nut 24 ein als Steuernocken dienendes, zylindrisches, walzenartiges Bauteil 41, welches gegenüber den Nockenarm 19 eigenbeweglich, gesondert ist und dessen Radius dem Radius der Ausrundungen 27 entspricht. Die axiale Länge des Bauteiles 41 entspricht der Breite des Nockenarmes 19. In seinem Mittelabschnitt weist das Bauteil 41 eine Einschnürung auf, in welche ein bogenförmig gekrümmtes Schenkelende 42 einer in der Ausnehmung 28 befindlichen Schenkelfeder 43 eingehängt ist. Das andere, ebenfalls gerundete Schenkelende 44 der Schenkelfeder 43 ist am Nockenarm 19 am dem Kolben 23 zugewandten Übergangsende der Nut 24 bzw. der Ausnehmung 28 in die Oberfläche des Nockenarmes 19 eingehängt, wie es aus Fig. 1 ersichtlich ist. Die Schenkelfeder 43 drückt also das Bauteil 41 schräg in Richtung zum Steuerkolben 18 und nach oben aus der Nut 24, das Bauteil 41 wird hierbei federnd an die obere Ausrundung 27 der Nutwandung angedrückt. In dieser aus Fig. 1 ersichtlichen Lage des Bauteiles 41 überragt letzteres etwa mit seiner oberen Halbzylinderfläche die Oberfläche des Nockenarmes 19 und stellt somit einen aus der Nockenarm-Oberfläche nach oben vorspringenden Steuernocken dar.

Der Anschlußnippel 9 ist über eine nicht dargestellte Steuerleitung mit einer Steuerdruckquelle der Druckluftanlage, beispielsweise der Verbindungsleitung zwischen einem Kompressor und einem üblichen Abblase-Druckregler zu verbinden.

3

Bei fehlendem Steuerdruck nimmt das Entwässerungsventil die aus Fig. 1 ersichtliche Schaltstellung ein. Aus dem nicht gezeigten, zu entwässernden und am Anschlußstutzen 2 angeschlossenen Luftbehälter strömt Druckluft und Kondensat durch die Bohrung 6 und die Längsnuten 33 in die Bohrung 7 sowie die Ventilkammer 15 ein, diese Räume sind also druckluftbeaufschlagt und das Kondensat sammelt sich in der Ventilkammer 15 auf der Verschlußplatte 16. Die Durchbrechung 17 ist unter der Kraft der Druckfeder 40 durch den Ventilkegel 38 verschlossen und in der Bohrung 10 befindet sich Atmosphärendruck. Der in der Bohrung 7 herrschende Behälterdruck belastet die Differenzfläche zwischen dem Steuerkolben 18 und dem Kolben 23 in Wirkrichtung nach links gemäß Fig. 1, so daß sich der Steuerkolben 18 mit dem Nockenarm 19 in der linken, durch Anschlag am Verschlußstopfen 8 bestimmten Endlage befindet. Das Bauteil 41 befindet sich dabei dicht links neben dem Kulissenstein 36.

Steigt nunmehr der Steuerdruck an, so wird der Steuerkolben 18 auf seiner linken Kolbenfläche druckluftbeaufschlagt und bewegt sich, sobald diese Druckluftbeaufschlagung die aus der Differenzflächen-Beaufschlagung der Kolben 18 und 23 vom Behälterdruck resultierende Kraft übersteigt, gemäß Fig. 1 nach rechts. Dabei wird das Bauteil 41 alsbald gegen die gerundete Unterfläche des Kulissensteines 36 angedrückt, wodurch das Bauteil 41 verstärkt in die obere Ausrundung 27 der Nut 24 hineingedrückt wird. Bei weiterer Verschiebung des Steuerkolbens 18 und des Nockenarmes 19 wird durch das Bauteil 41 der Kulissenstein 36 mitsamt dem ganzen Ventilkörper 29 entgegen der Kraft der Druckfeder 40 angehoben, wobei sich der Ventilkegel 38 von der Durchbrechung 17 abhebt und diese als Auslaßöffnung für das auf der Verschlußplatte 16 anstehende Kondensat freigibt. Die in der Ventilkammer 15 anstehende Druckluft bläst das Kondensat rasch durch die Durchbrechung 17 ins Freie ab. Beim Weiterbewegen des Steuerkolbens 18 wandert das Bauteil 41 unter dem Kulissenstein 36 hindurch und gelangt in eine gemäß Fig. 1 rechts vom Kulissenstein 36 befindliche Lage, in welcher es den Kulissenstein 36 wieder freigibt, so daß die Druckfeder 40 den Ventilkörper 29 mitsamt dem Dichtkegel 38 wieder nach unten schiebt, wobei der Ventilkegel 38 die Durchbrechung 17 wieder verschließt. Die in der Bohrung 10 befindliche Luft wurde bei der Verschiebung des Kolbens 23 durch die Belüftungsöffnung 12 zur Atmosphäre verdrängt, im verkürzten Raum der Bohrung 10 herrscht nach wie vor Atmosphärendruck.

Wenn nunmehr der Steuerdruck rasch absinkt, wie es beispielsweise bei Erreichen der vollen Regeldruckhöhe im zu entwässerenden Luftbehälter und damit Öffnen des Abblaseventils des Druckreglers der Fall sein kann, schiebt der die Differenzfläche zwischen dem Steuerkolben 18 und dem Kolben 23 belastende Behälterdruck diese beiden Kolben mitsamt dem Nockenarm 19 relativ rasch in die in Fig. 1 dargestellte, linke Endlage zurück. Zu Beginn dieser Bewegung gelangt das Bauteil 41 mit dem Kulissenstein 36 in Eingriff und wird vom Kulissenstein 36 in Richtung nach gemäß Fig. 1 rechts unten, also etwa in Richtung zum Nutgrund 26 hin belastet. Dabei wird alsbald die Vorspannung der Schenkelfeder 43 überwunden und das Bauteil 41 wird unter Verspannung der Schenkelfeder 43 in die Nut 24 hineingedrückt, so daß es die Oberfläche des Nockenarmes 19 praktisch nicht mehr überragt. Das Bauteil 41 kann dann unter dem Kulissenstein 36 nach links hindurchwandern, ohne daß der Kulissenstein 36 und damit der Ventilkörper 29 angehoben werden. Sobald sich das Bauteil 41 links vom Kulissenstein 36 befindet und von diesem freikommt, vermag die Schenkelfeder 43 das Bauteil wieder in die in Fig. 1 dargestellte Lage in der Nut 24 nach oben zu drücken.

Ein vollständiges Herausdrücken des Bauteiles 41 aus der Nut 24 nach oben ist ausgeschlossen, da in der aus Fig. 1 ersichtlichen Lage das Bauteil 41 seinen oberen, äußeren Randpartien an Wandungsabschnitten der Bohrung 7 zur Anlage gelangt und sich somit nicht weiter nach oben verschieben läßt. Beim Rückhub von der rechten in die linke Endstellung des Steuerkolbens 18 verbleibt also der Ventilkörper 29 in Ruhe und die Durchbrechung 17 bleibt verschlossen. Damit ist ein Arbeitszyklus des Entwässerungsventils beendet.

Der Nockenarm 19 mit dem Bauteil 41 wirken mit dem Kulissenstein 36 also in Art eines Nockengetriebes zusammen, welches die nach rechts (Fig. 1) gerichtete Bewegung des Steuerkolbens 18 auf den Ventilkörper 29 als kurze Hin- und Herbewegung überträgt. Die besondere Anordnung des Bauteils 41 in der Nut 24 stellt dabei eine Freilaufeinrichtung dar, welche bei der Rechtsbewegung des Steuerkolbens 18 sperrt, das Nockengetriebe also zur Wirkung bringt, während bei der nach links gerichteten Bewegung des Steuerkolbens 18 diese Freilaufeinrichtung löst, das Nockengetriebe 36, 41 somit unwirksam gestaltet und somit einen hinsichtlich des Ventilkörpers 29 keine Auswirkungen zeigenden Rückhub des Steuerkolbens 18 ermöglicht.

Falls, ausgehend von der gemäß Fig. 1 rechten Endstellung des Steuerkolbens 18, der Steuerdruck nur langsam absinkt, wie es beispielsweise bei einem Stillsetzen des Kompressor-Antriebes und Entlüften des Steuerdruckes über undichte Kompressorventile der Fall sein kann, beginnt bei Erreichen einer bestimmten Steuerdruckabsenkung der Steuerkolben 18 sich langsam nach links zu verschieben. Das Bauteil 41 wird dabei vom Kulissenstein 36 in die Nut 24 zurückgedrückt, so daß es ohne Bewegung des Kulissensteins 36 unter diesem hindurch wandern kann, wozu infolge der langsamen Bewegung des Steuerkolbens 18 eine beachtlich lange Zeitspanne erforderlich sein kann. Im Gegensatz zu dem eingangs erwähnten, bekannten Entwässerungsventil nach dem DE-GM 75 23 279, welches bei diesem Vorgang ein lang andauerndes Öffnen der Auslaßöffnung und damit eine lang andauernde Entlüftung der Druckluftanlage bzw. des zu entwässernden Luftbehälters bewirken würde, bleibt beim nach der Erfindung ausgebildeten Entwässerungsventil die Durchbrechung 17 verschlossen und es tritt keine Entlüftung der Druckluftanlage bzw. des Luftbehälters ein. Der Druckluftvorrat in der Druckluftanlage bleibt also voll erhalten, es ergibt sich kein unnötiger Energieverlust und bei Wiederinbetriebnahme des Kompressors ist alsbald, ohne lange Wiederaufladezeiten, der volle Betriebsdruck in der Druckluftanlage erreicht.

Sollte für das Entwässerungsventil nicht, wie vorstehend beschrieben, die Absenkung des Steuerdruckes, sondern dessen Anstieg stark verzögert erfolgen, so ist die Freilaufeinrichtung 24, 41, 43 derart umzugestalten, daß sie, bezogen auf die Bewegungsrichtung des Steuerkolbens 18, umgekehrt zur Ausführungsform nach Fig. 1 sperrt bzw. löst : Die Nut 24 ist dann abweichend zu Fig. 1 und Fig. 3 nicht nach rechts-unten, sondern nach links-unten festzulegen und die Ausrundungen 27 sind von der linken auf die rechte Nutwandung zu verlagern ; die Schenkelfeder 43 ist entsprechend zu verlagern. In dieser geänderten Ausführung wird das Bauteil 41 bei Bewegung des Steuerkolbens nach rechts in die Nut eingedrückt, so daß das Nockengetriebe 36, 41 wirkungslos bleibt. Auch bei einer sehr langsamen Bewegung des Steuerkolbens 18 in dieser Richtung kann dann kein unerwünscht langes Öffnen der Durchbrechung 17 auftreten, diese bleibt vielmehr während des ganzen Bewegungshubes verschlossen. Bei der Rückbewegung des Steuerkolbens 18 nach links, welche bei dieser geänderten Ausführungsform infolge der hierbei raschen Druckabsenkung des Steuerdruckes relativ rasch erfolgt, sperrt die Freilaufeinrichtung und es ergibt sich ein kurzzeitiges Öffnen der Durchbrechung 17 mit einem Ausblasen des Kondensates.

Das Nockengetriebe sowie die Freilaufeinrichtung können natürlich auch abweichend zu den vorstehend beschriebenen Ausführungsformen ausgebildet sein, es bieten sich hierzu viele konstruktive Möglichkeiten an. Eine dieser Möglichkeiten besteht beispielsweise darin, anstelle der Nut 24 und des Bauteiles 41 auf der Oberseite des Nockenarmes 19 eine einseitig befestigte, nach oben ausgekröpfte Blattfeder vorzusehen, welcher in einer Bewegungsrichtung des Nockenarmes 19 vom Kulissenstein 36 platt gedrückt werden kann, was einem Lösen der Freilaufeinrichtung entspricht, so daß in dieser Bewegungsrichtung des Nockenarmes 19 kein Öffnen der Durchbrechung 17 erfolgt, während in entgegengesetzter Bewegungsrichtung des Nockenarmes 19 die Blattfeder sich unter der vom Kulissenstein 36 auf sie einwirkende Belastung versteift, somit nicht plattgedrückt werden kann und ein Anheben des Kulissensteines 36 mit entsprechender Öffnung der Durchbrechung 17 bewirkt.

Eine andere Ausführungsform des Nockengetriebes mit Freilaufeinrichtung ist in Fig. 5 gezeigt. In Fig. 5 ist ein Ausschnitt aus dem Nockenarm in vergrößertem Maßstab unter dem Bezugszeichen 19′ dargestellt. Der Nockenarm 19′ ist mit einer von seiner Oberseite ausgehenden Nut 45 versehen, deren gemäß Fig. 5 linke Wandung 46 annähernd rechtwinklig zur Längsrichtung des Nockenarmes 19′ und deren gegenüberliegende Wandung 47 nur flach nach rechts-oben ansteigend verläuft. In der Nut 45 ist nahe des Nutgrundes 48 ein Hebel 49 um einen Stift 50 drehbar gelagert, derart, daß er in seiner dargestellten, aufrechten Drehlage sich mit seiner Seitenwandung an der Wandung 46 der Nut 45 abstützt und mit seinem gerundeten Ende 51 die Oberfläche 52 des Nockenarmes 19′ nockenartig überragt. Eine nicht dargestellte Drehfeder, welche zwischen dem Nockenarm 19′ und dem Hebel 49 eingespannt sein kann, übt auf den Hebel 49 ein entgegen dem Uhrzeigersinn gerichtetes Drehmoment aus, so daß der Hebel 49 federnd in seine in Fig. 5 dargestellte Lage gedrückt wird. Falls auf das Ende 51 des Hebels 49 eine nach rechts gerichtete Kraft einwirkt, vermag sich der Hebel entgegen der Kraft der Drehfeder um den Stift 50 im Uhrzeigersinn zu drehen, wobei er vollständig in die Nut 45 eintreten kann und die Oberfläche 52 nicht mehr überragt. Es ergibt sich somit, daß das bei Einsatz des Nockenarmes 19′ in einem in übrigen nach Fig. 1 ausgebildeten Entwässerungsventil bei nach rechts gerichteter Bewegung des Nockenarmes 19′ der Kulissenstein 36 von rechts gegen das Ende 51 des Hebels 49 anläuft und den Hebel 49 verstärkt gegen die Wandung 46 andrückt. Der Hebel 49 kann in dieser Bewegungsrichtung nicht ausweichen, er verbleibt in seiner aufrechten Lage und beim Weiterbewegen des Nockenarmes 19′ wird der Kulissenstein 36 zum Öffnen der Durchbrechung 17 angehoben, bis der Hebel 49 andererseits, rechts, unter dem Kulissenstein 36 wieder austritt und freikommt. Bei entgegengesetzter, links gerichteter Bewegung des Nockenarmes 19′ dagegen übt der dann von links gegen das Ende 51 anlaufende Kulissenstein 36 auf den Hebel 49 ein Drehmoment aus, unter welchem der Hebel 49 in die Nut 45 einschwenkt. Der Nockenarm 19′ vermag dann ohne Anheben des Kulissensteines 36 unter diesem nach links hindurchzuwandern, was ein Lösen der Freilaufeinrichtung bedeutet.

Beispielsweise zu Prüfzwecken kann das Entwässerungsventil auch von Hand durch Hochdrücken des nach unten vorstehenden Zapfenansatzes 39 betätigt werden, der Ventilkörper 29 wird dabei gegen die Kraft der Druckfeder 40 angehoben.

Bezugszeichenliste

1   Gehäuse
2   Anschlußstutzen
3   Siebkorb
4   Kontermutter
5   Dichtungsring
6   Bohrung
7   Bohrung
8   Verschlußstopfen

5

# 0 087 632

9 Anschlußnippel
10 Bohrung
11 Gehäusewand
12 Belüftungsöffnung
13 Platte
14 Gehäusewand
15 Ventilkammer
16 Verschlußplatte
17 Durchbrechung
18 Steuerkolben
19, 19′ Nockenarm
20 Stufe
21 Verschneidungslinie
22 Führungsabschnitt
23 Kolben
24 Nut
25 Öffnung
26 Nutgrund
27 Ausrundung
28 Ausnehmung
29 Ventilkörper
30, 31 Führungsabschnitt
32 Führungsabschnitt
33 Längsnut
34 Steg
35 Freiraum
36 Kulissenstein
37 Flansch
38 Ventilkegel
39 Zapfenansatz
40 Druckfeder
41 Bauteil
42 Schenkelende
43 Schenkelfeder
44 Schenkelende
24, 41, 43 Freilaufeinrichtung
36, 41 Nockengetriebe
45 Nut
46 Wandung
47 Wandung
48 Nutgrund
49 Hebel
50 Stift
51 Ende
52 Oberfläche

**Patentansprüche**

1. Gesteuertes Entwässerungsventil für Druckluftanlagen, insbesondere Druckluftbremsanlagen von Kraftfahrzeugen, mit einem Gehäuse (1), das eine ständig mit einer Einlaßöffnung in Verbindung stehende Kondensatkammer (z. B. Ventilkammer 15) aufweist, von welcher eine durch einen in Schließrichtung vorbelasteten Ventilkörper (29) verschließbare Auslaßöffnung (z. B. Durchbrechung 17) zur Atmosphäre führt, mit einem quer zur Bewegungsrichtung des Ventilkörpers (29) verschieblichen, von einem Steuerdruck beaufschlagbaren Steuerkolben (18) und mit einem Nockengetriebe (z. B. Kulissenstein 36 und Bauteil 41 bzw. Hebel 49) zur Kupplung des Ventilkörpers (29) mit dem Steuerkolben (18), wobei das Nockengetriebe (36 und 41 bzw. 49) einen vom Steuerkolben (18) einseitig auskragenden Nockenarm (19, 19′) mit einem in Bewegungsrichtung des Ventilkörpers (29) zum Freigeben der Auslaßöffnung (17) vorspringenden Steuernocken (z. B. Bauteil 41, Hebel 49) und einen mit dem Steuernocken (41, 49) zusammenwirkenden, mit dem Ventilkörper (29) verbundenen Gleitstein (z. B. Kulissenstein 36) umfaßt, dadurch gekennzeichnet, daß das Nockengetriebe (36 und 41 bzw. 49) eine in Abhängigkeit von der Bewegungsrichtung des Steuerkolbens (18) schaltende Freilaufeinrichtung aufweist, welche eine Bewegungsübertragung vom Steuerkolben (18) über das Nockengetriebe (36 und 41 bzw. 49) zum Ventilkörper (29) nur in einer Bewegungsrichtung des Steuerkolbens (18) ermöglicht.

2. Entwässerungsventil nach Anspruch 1, dadurch gekennzeichnet, daß die Freilaufeinrichtung eine Bewegungsübertragung vom Steuerkolben (18) zum Ventilkörper (29) nur in der der Beaufschlagungsrichtung des Steuerkolbens (18) durch den Steuerdruck entsprechenden Bewegungsrichtung des Steuerkolbens (18) ermöglicht.

3. Entwässerungsventil nach Anspruch 1 oder 2, dadurch gekennzeichnet, daß der Steuernocken (z. B. Bauteil 41, Hebel 49) federnd in eine schräg zur Bewegungsrichtung des Steuerkolbens (18) verlaufende, im Nockenarm (19, 19') befindliche Nut (24, 45) zurückdrückbar angeordnet ist.

4. Entwässerungsventil nach Anspruch 3, dadurch gekennzeichnet, daß der Steuernocken als zylindrisches, gesondertes Bauteil (41) mit quer zu den Bewegungsrichtungen des Steuerkolbens (18) und des Ventilkörpers (29) verlaufender Achsrichtung ausgebildet ist und daß in einer Ausnehmung (28) des Nockenarmes (19) eine Schenkelfeder (43) vorgesehen ist, deren einer Schenkel (42) sich am Steuernocken und deren anderer Schenkel (44) an einem Widerlager am Nockenarm (19) anliegt, wobei die Federkraft der Schenkelfeder (43) wenigstens annähernd in Ausheberichtung des Steuernockens aus der Nut (24) wirkt.

5. Entwässerungsventil nach Anspruch 4, dadurch gekennzeichnet, daß der Steuernocken (z. B. Bauteil 41) einen mittleren Abschnitt verringerten Durchmessers aufweist, an welchem die Schenkelfeder (43) anliegt, und daß die Nutwandung am stumpfwinkligen Übergang zur Außenwandung des Nockenarmes (19) eine der Außenfläche des Steuernockens angepaßte Ausrundung (27) aufweist.

6. Entwässerungsventil nach Anspruch 3, dadurch gekennzeichnet, daß die Nut (24) von ihrer Öffnung (25) zum Nutgrund (26) in der Bewegungsrichtung des Steuerkolbens (18) zum Sperren der Freilaufeinrichtung geneigt verläuft.

7. Entwässerungsventil nach Anspruch 1 oder 2, dadurch gekennzeichnet, daß der Nocken (Hebel 49) einseitig entgegen Federkraft in eine Nut (45) des Nockenarmes (19') einschwenkbar am Nockenarm (19') angelenkt ist (Fig. 5).

8. Entwässerungsventil nach einem oder mehreren der vorstehenden Ansprüche, dadurch gekennzeichnet, daß der den Nockenarm (19, 19') verschieblich überkreuzende Ventilkörper (29) ober- und unterhalb des Nockenarmes (19, 19') Schiebeführungen (z. B. Führungsabschnitt 30, 31) zu Gehäuseteilen aufweist.

9. Entwässerungsventil nach einem oder mehreren der vorstehenden Ansprüche, wobei das dem Steuerkolben (18) abgewandte Ende des Steuerarmes (19) einen Führungsabschnitt (22) zum Gehäuse (1) aufweist, dadurch gekennzeichnet, daß der Führungsabschnitt (22) einen Kolben (23) umfaßt, der auf seiner Außenseite von Atmosphärendruck beaufschlagt ist und der einen kleineren Durchmesser als der Steuerkolben (18) aufweist.


**Claims**

1. Controlled drainage valve for compressed-air systems, more particularly compressed-air braking systems of motor vehicles, having a housing (1) which has a condensate chamber (for example, valve chamber 15), which is constantly connected with an inlet opening and from which an outlet opening (for example, break-through 17), which may be closed by means of a valve body (29), which is preloaded in the closing direction, leads to the atmosphere, having a control piston (18), which may be shifted crosswise in respect of the direction of movement of the valve body (29) and upon which a control pressure may act, and having a cam-type drive (for example, shifting block 36 and component part 41 or lever 49) for coupling the valve body (29) with the control piston (18), in which case the cam-type drive (36 and 41 or 49) comprises a cam arm (19, 19'), which juts out from control piston (18) on the one side, with a control cam (for example, component part 41, lever 49), which projects in the direction of movement of the valve body (29) for unblocking the outlet opening (17), and a sliding block (for example, shifting block 36), which cooperates with the control cam (41, 49) and which is connected with the valve body (29), characterised in that the cam-type drive (36 and 41 or 49) has a free-running device which switches as a function of the direction of movement of the control piston (18) and which renders possible transmission of motion from the control piston (18) via the cam-type drive (36 and 41 or 49) to the valve body (29) in just one direction of movement of the control piston (18).

2. Drainage valve according to claim 1, characterised in that the free-running device renders possible transmission of motion from the control piston (18) to the valve body (29) in just that direction of movement of the control piston (18) which corresponds to the direction in which the control pressure acts upon the control piston (18).

3. Drainage valve according to claim 1 or 2, characterised in that the control cam (for example, component part 41, lever 49) is arranged so that it may be pressed back resiliently into a groove (24, 45) which extends obliquely in respect of the direction of movement of the control piston (18) an which is located in the cam arm (19, 19').

4. Drainage valve according to claim 3, characterised in that the control cam is constructed as a cylindrical, separate component part (41) with axle direction extending crosswise in respect of the direction of movement of the control piston (18) and of the valve body (29) and in that provided in a recess (28) of the cam arm (19) there is a leg spring (43), the one leg (42) of which rests against the control cam and the other leg (44) of which rests against an abutment on the cam arm (19), in which case the spring force of the leg spring (43) acts at least approximately in the direction of lift of the control cam out of the groove (24).

5. Drainage valve according to claim 4, characterised in that the control cam (for example, component part 41) has a central section of reduced diameter against which the leg spring (43) rests and in that the groove wall at the obtuse-angled point of transition to the outer wall of the cam arm (19) has a rounded section (27) which is adapted to the outer surface of the control cam.

6. Drainage valve according to claim 3, characterised in that the groove (24) extends sloping from its opening (25) to the base (26) of the groove in the direction of movement of the control piston (18) for the purpose of blocking the free-running device.

7. Drainage valve according to claim 1 or 2, characterised in that the cam (lever 49) is articulated on the cam arm (19') on the one side against the spring force so that it may be swung into a groove (45) of the cam arm (19') (Figure 5).

8. Drainage valve according to one or several of the preceding claims, characterised in that the valve body (29), which crosses over the cam arm (19, 19') in a shiftable manner, has, above and below the cam arm (19, 19'), slide guides (for example, guide section 30, 31) in respect of housing portions.

9. Drainage valve according to one or several of the preceding claims, in which the end of the control arm (19) remote from the control piston (18) has a guide section (22) in respect of the housing (1), characterised in that the guide section (22) comprises a piston (23) upon the outside of which atmospheric pressure acts and which has a smaller diameter than the control piston (18).

## Revendications

1. Valve de purge commandée pour des installations à air comprimé, en particulier pour des installations de freinage à air comprimé de véhicules automobiles, avec un carter qui comporte une chambre de condensation (par exemple une chambre de valve 15) en liaison permanente avec une ouverture d'admission et à partir de laquelle une ouverture d'évacuation (par exemple ouverture 17) qui est susceptible d'être obturée par un corps de base (29) préchargé dans le sens de la fermeture, mène à l'atmosphère, avec un piston de commande (18) mobile transversalement à la direction de déplacement du corps de valve (29) et susceptible d'être chargé par une pression de commande, et avec une transmission à came (par exemple coulisseau 36 et élément 41 ou levier 49) pour accoupler le corps de valve (29) au piston de commande (18), la transmission à came (36 et 41 ou 49) comportant un bras à came (19, 19') en saillie unilatéralement sur le piston de commande (18) avec une came de commande (par exemple élément 41, levier 49) saillant dans le sens du déplacement du corps de valve (29) pour dégager l'ouverture d'évacuation (17), ainsi qu'une pièce coulissante (par exemple coulisseau 36) qui coagit avec la came de commande (41, 49) et reliée au corps de valve (29), caractérisée par le fait que la transmission à came (36 et 41 ou 49) comporte un dispositif à roue libre qui commute en fonction du sens du déplacement du piston de commande (18) et qui n'autorise une transmission du déplacement du piston de commande (18), par l'intermédiaire de la transmission à came (36 et 41 ou 49) vers le corps de valve que dans un sens du déplacement du piston de commande (18).

2. Valve de purge selon la revendication 1, caractérisée par le fait que le dispositif à roue libre n'autorise une transmission de mouvements du piston de commande (18) vers le corps de soupape (29) que dans le sens du déplacement du piston de commande qui correspond au sens de la charge qui s'exerce sur le piston de commande (18) par la pression de commande.

3. Valve de purge selon la revendication 1 ou 2, caractérisée par le fait que la came de commande (par exemple élément 41, levier 49) est susceptible d'être refoulée élastiquement dans une gorge (24, 25) qui se trouve dans le bras de came (19, 19') et qui s'étend obliquement par rapport au sens du déplacement du piston de commande (18).

4. Valve de purge selon la revendication 3, caractérisée par le fait que la came de commande est réalisée sous la forme d'un élément séparé (41) cylindrique, avec direction axiale qui s'étend transversalement aux directions du déplacement du piston de commande (18) et du corps de valve (29), et que dans une ouverture (28) du bras de came (19) est prévu un ressort à branches (43) dont une branche (42) porte contre la came de commande et dont l'autre branche (44) porte sur un contre-appui du bras de came (19), la force du ressort à branches (43) agissant au moins approximativement dans le sens du décollement de la came de commande hors de la gorge (24).

5. Valve de purge selon la revendication 4, caractérisée par le fait que la came de commande (par exemple élément 41) comporte une section médiane à diamètre diminué, contre laquelle porte le ressort à branches (43), et que la paroi de la gorge comporte, au niveau du passage à angle obtus vers la paroi extérieure du bras de came (19), un arrondi (27) qui est adapté à la surface extérieure de la came de commande.

6. Valve de purge selon la revendication 3, caractérisée par le fait que la gorge (24), s'étend, à l'avant de son ouverture (25) vers le fond de la gorge (26), une allure inclinée dans le sens du déplacement du piston de commande (18), en vue du blocage du dispositif à roue libre.

7. Valve de purge selon la revendication 1 ou 2, caractérisée par le fait que la came (levier 49) est articulée unilatéralement sur le bras de came (19') de manière à pouvoir être basculée, à l'encontre de la force d'un ressort, dans une gorge (45) du bras de came (19') (figure 5).

8. Valve de purge selon une ou plusieurs des revendications précédentes, caractérisée par le fait que le corps de valve (29) qui croise, avec coulissement, le bras de came (19, 19'), comporte, au-dessus et en dessous du bras de came (19, 19'), des guidages (par exemple sections de guidage 30, 31) vers des parties du carter.

9. Valve de purge selon une ou plusieurs des revendications précédentes, dans laquelle l'extrémité du bras de commande (19) qui est éloignée du piston de commande (18), présente une section de guidage (22) vers le carter (1), caractérisée par le fait que la section de guidage (22) comporte un piston (23) qui est chargé, sur son côté extérieur, par la pression atmosphérique et qui possède un diamètre qui est inférieur à celui du piston de commande (18).

Fig. 1

Fig.2

Fig.3

Fig. 4

Fig. 5